# EUROPÄISCHE PATENTANMELDUNG

(11) **EP 3 255 022 A1**
(43) Veröffentlichungstag der Anmeldung: **13.12.2017**
(21) Anmeldenummer: 17172159.0
(22) Anmeldetag: 22.05.2017
(51) Int. Cl.: C04B 24/02, C04B 24/32, C04B 28/02, C04B 28/14, C04B 40/00

(54) **SCHÄUMUNGSMITTEL FÜR BAUSTOFF-BINDEMITTELLEIME**

(30) Priorität: 26.05.2016 DE 102016109751
(71) Anmelder: CellConTec GmbH, 38446 Wolfsburg (DE)
(72) Erfinder: Dr. Graf von der Schulenburg, Günzel, 38446 Wolfsburg (DE)
(74) Vertreter: Lins, Martina

(57) **Zusammenfassung**

Ein Schäumungsmittel, insbesondere für das Schäumen eines Baustoff-Bindemittelleims zur Herstellung porenhaltiger Leichtbau- und Dämmmaterialien wird bezüglich seiner Stabilität und Verwendbarkeit bei tieferen Außentemperaturen verbessert. Das Schäumungsmittel in Form einer wässrig-organischen Lösung besteht zu wenigstens 85 Gew.-% aus den folgenden Bestandteilen: a) einer Tensidkomponente, die wenigstens ein schaumbildendes ionisches Tensid enthält, b) einer Fettalkoholkomponente, die wenigstens einen Fettalkohol und wenigstens einen ethoxylierten Fettalkohol im Mischungsverhältnis FA/FAEO von 95:5 bis 0:100 enthält, c) einer Glykolkomponente, die wenigstens einen Bestandteil der Gruppe Alkylglykole, Alkylenglykole bis C6-Alkyl, Diglykole, insbesondere Alkyldiglykole und Diglykolether enthält, und Wasser.

## Beschreibung

Die Erfindung betrifft ein Schäumungsmittel, insbesondere für das Schäumen eines Baustoff-Bindemittelleims zur Herstellung porenhaltiger Leichtbau- und Dämmmaterialien. Die erzeugten Baustoffschäume, nämlich geschäumten Baustoffleime, binden, ggf. nach Zugabe von Zuschlag bzw. Gesteinskörnung, unter möglichst weitgehendem Erhalt der Porenstruktur ab und bilden dabei vor Ort eingebrachte Poren-Leichtbaustoffe und -Dämmmaterialien oder geformte Produkte, wie Steine, Platten und andere Formkörper.

Gattungsgemäße Baustoffschäumungsmittel sind im wesentlichen "Seifenlösungen", die beim Aufschäumen der Baustoffleime Verwendung finden und die in ihrer Zusammensetzung so eingestellt sind, dass sie sich in dem Baustoffleim oder einer Vorstufe davon gut und gleichmäßig verteilen, wobei Zusatzstoffe in der Seifen- bzw. Tensidlösung unter anderem dazu dienen, den Schaum bis zum Abbinden möglichst weitgehend und unter verschiedensten Konditionen (wie Temperaturen, Förderbedingungen, Druckverhältnisse) zu stabilisieren.

Im Allgemeinen wird der Bindemittelleim, der gelegentlich, insbesondere, wenn er mit Zuschlägen vermischt ist, auch als Bindemittelmaische bezeichnet wird, mit einem separat aus einem Schäumungsmittel und Wasser hergestellten Schaum vermischt, so dass man eine mit Luftblasen durchsetzte Masse erhält.

Die zu schäumenden Baustoffe sind insbesondere hydraulisch abbindende Baustoffe, deren Festigkeit durch Bindemittel bereitgestellt und durch Additive und Zuschläge verstärkt oder wie gewünscht eingestellt wird.

Bei den Baustoffen im Sinne dieser Beschreibung kann es sich um Gips, Beton, Kalk oder Mischformen hiervon handeln. Die Bindemittel umfassen gelöschten Kalk, Gips als Natur- und REA-Gips und verschiedenste Zementarten, bevorzugt Portlandzement oder Tonerdeschmelzzemente. Die Bezeichnung der Bindemittel Gips, Kalk und Zement umfasst üblicherweise auch solche Bindemittel, die in untergeordneter Menge ein anderes Bindemittel oder weitere zusätzliche pulverförmige mineralische Bestandteile, z.B. anorganische Oxide (Mg, Si, Fe) umfassen.

Aus Bindemittel und Wasser (Anmach- oder Zugabewasser) wird ein Bindemittelleim hergestellt. Bestandteile des Bindemittels reagieren mit dem Wasser und binden dabei ab. Teilweise ergibt dies direkt den Baustoff, z.B. bei Füllgips und bestimmten Kalkputzen. In anderen Fällen wird dem Bindemittelleim noch ein Zuschlag, meist Kies, Sand, Aschen oder Schlacken zugemischt. Es können Additive, hier auch "baustoffchemische Zusätze" genannt hinzukommen, um dem Baustoff besondere gewünschte Eigenschaften zu verleihen oder mehr Festigkeit zu geben. Alle diese mit Wasser angemachten Gemische werden hier unter dem Begriff "Bindemittelleim" zusammengefasst.

Ziel ist es, dass die mit dem Schäumungsmittel geschäumte Baustoffleim-Masse unter Erhalt der Porenstruktur abbindet. Längere Standzeiten, ein Fördern der Masse zum Anwendungsort, Temperatureinflüsse und anderes mehr beschleunigen den Zerfall der Porenstruktur häufig derart, dass kein zufriedenstellendes Ergebnis erzielt werden kann.

Die US 4 678 515 A (Green) offenbart ein Verfahren zur Herstellung einer Gipskartonplatte mit einem vor dem Aushärten geschäumten Gipskern. Das Schäumungsmittel enthält Natrium- und/oder Ammoniumsalze n-Alkyl-ethoxylierter Schwefelsäuren, bzw. Salze der Mono-Schwefelsäureester von ethoxylierten Fettalkoholen, der Formel CH₃(CH₂)ₓCH₂(OCH₂CH₂)_{y}OSO₃⁻ M⁺ mit x = 6 bis 12 und y = 1 bis 3,5, wobei eine Mischung unterschiedlich ethoxylierter Ester vorgeschlagen wird. Die daraus erzeugten Schäume sollen ein relativ großes Schaumvolumen und eine gute Stabilität zeigen.

Die US 4 156 615 (Cukier) beschreibt eine sehr ähnliche Gipskartonplatte, bei der eine Stuckgips-Suspension mit einem gesondert hergestellten Schaum aus formelmäßig der Offenbarung von "Green" entsprechenden Tensiden hergestellt wird. Der Vorteil soll hier allerdings darin bestehen, dass die Hydratation beschleunigt wird und die Platte schneller abbindet.

Die aus dem Stand der Technik bekannten Schäume haben den Nachteil, dass sie nicht ausreichend förderbar sind, d.h. zum Beispiel beim Einpressen in zu dämmende Hohlräume zusammenfallen, und dass die gleichen Rezepturen in der Regel nicht sowohl bei Raumtemperatur, als auch bei höheren und tieferen Temperaturen verwendbar sind. Aus bestimmten bekannten Schäumungsmitteln fallen bei Temperaturen unter 10 °C Bestandteile aus, so dass die Schäumungsmittel auf der Baustelle vor ihrem Einsatz erwärmt und wieder homogenisiert werden müssen. Dies ist nicht praktikabel.

Die Aufgabe der Erfindung besteht darin, ein verbessertes Schäumungsmittel, insbesondere für Baustoffschäume aus hydraulisch abbindenden Baustoffleimen bereitzustellen, das Nachteile aus dem Stand der Technik vermeidet.

Zur Lösung dieser Aufgabe ist ein Schäumungsmittel nach den Ansprüchen 1 und 9 vorgesehen. Mit Hilfe dieses Schäumungsmittels kann ein geschäumter Baustoffleim erzeugt werden, der u.a. auf Baustellen und insbesondere im Straßenbau als leichtes, vor Ort produziertes und eingebrachtes Dämm- und Ausgleichsmaterial eingesetzt werden kann.

Es wurde gefunden, dass das erfindungsgemäße Schäumungsmittel auch zur Herstellung anders verwendbarer Schäume geeignet ist. Ein mit dem Schäumungsmittel und Wasser sowie ggf. weiteren Zusatzstoffen erzeugter Schaum kann z.B. als Schaumlöschmittel verwendet werden. Auch können andere Massen als Baustoffleime, z.B. Lösungen und Suspensionen für andere Werkstoffe, aufgeschäumt werden. Durch Abbinden oder Trocknen solcher weiterer Massen entstehen poröse Werkstoffe für verschiedenste Arbeitsgebiete.

Nach einem bevorzugten Aspekt der Erfindung sind mit Hilfe des Schäumungsmittels Porenleichtbauprodukte nach Anspruch 9 erhältlich, insbesondere Bauelemente, die beispielsweise gegossen oder gespritzt werden können. Vorzugsweise umfassen solche Bauelemente Platten, Formsteine und Verbundplatten mit anderen Materialien, z.B. Gipskartonplatten.

Das Schäumungsmittel nach der Erfindung besteht grundsätzlich aus drei Grundkomponenten: a) der Tensidkomponente, b) der Fettalkoholkomponente und c) der Glykolkomponente. Das Tensid oder die Tenside der Tensidkomponente werden üblicherweise als (z.B. 1 - 4 %ige) wässrige Lösungen eingekauft bzw. vorgehalten und in geeigneter Menge mit den übrigen, den organischen Bestandteilen der Zusammensetzung gemischt. Weiteres Wasser kann hinzukommen. Es ergibt sich ein tensidisches Schäumungsmittel in wässrig-organischer Lösung, d.h. in einer Lösung mit Wasser und wassermischbaren organischen Lösemitteln, bzw. wassermischbaren organisch-chemischen Stoffen, die als organische Lösemittel, Lösungsvermittler usw. aufgefasst werden können.

Die vorstehend genannte Grundzusammensetzung macht wenigstens 80 Gew.-% des Schäumungsmittels aus, vorzugsweise wenigstens 90 Gew.-%. Von dem Schäumungsmittel - unter Erhalt einer homogenen Mischung und der gewünschten Wirkung - tolerierte weitere Bestandteile sind unter anderem zusätzliche vollständig und vorzugsweise in jedem Verhältnis mit Wasser mischbare Alkohole, z.B. n- und iso-Alkylalkohole, z.B. Ethanol oder Butanol.

Die Tensidkomponente a) enthält in den bevorzugten Ausführungsformen ausschließlich anionische Tenside.

Als Tenside sind grundsätzlich stark schäumende alkalistabile oder selbst alkalisch reagierende Tenside geeignet. Dabei kommt es in erster Linie auf eine hohe Schäumkraft an. Bevorzugt sind Sulfonate, Alkylsulfate, insbesondere Alkalialkylsulfate, Alkylensulfate oder Alkylethersulfate. Die Alkylketten oder Alkylenketten der Sulfonate und Sulfate sind vorzugsweise langkettig und weiter vorzugsweise unverzweigt. Kettenlängen größer oder gleich C8 und vorzugsweise zwischen C10 und C18 können als typisch angesehen werden.

Bevorzugte Tenside umfassen u. a. lineare Alkylsulfonate, Alphaolefinsulfonate und Betaolefinsulfonate, Alkali- und Ammoniumsalze von Monoestern der Schwefelsäure mit Alkylresten ab C6 sowie die Monoschwefelsäureester selbst. Derzeit bevorzugt sind Alphaolefinsulfonate, z.B. Natrium C12-14-Olefin-Sulfonat, und unter den Alkylsulfaten SDS und SLS.

Weitere verwendbare anionische Tenside sind solche die als schäumende anionische Tenside im Handel und in größerer Menge, d.h. nicht nur als Feinchemikalien im Labormaßstab, verfügbar sind. Hierzu gehören Succinate, langkettige Carbonsäuren und deren Salze, Ether- und Estercarbonsäuren sowie andere mehr.

Es kann ein einzelnes Tensid oder eine Mischung mehrerer Tenside eingesetzt werden. Der Tensidgehalt in dem Schäumungsmittel beträgt bevorzugt wenigstens 0,5 Gew.-% (Substanzgehalt) bezogen auf 100 Gew.-% des Schäumungsmittels insgesamt, kann jedoch auch deutlich höher liegen. Dies kann der Fachmann im Rahmen üblichen fachmännischen Könnens selbst einstellen. Geeignete Konzentrationen unterscheiden sich grundsätzlich nicht von solchen, die für entsprechende Mittel im Stand der Technik bereits bekannt und in Gebrauch sind.

Die Fettalkoholkomponente b) besteht aus wenigstens einem Fettalkohol und wenigstens einem ethoxylierten Fettalkohol im Mischungsverhältnis FA/FAEO von 30:70 bis 70:30. Der als Stützmittel bekannte Fettalkohol (FA), der dem Schaum mehr Stabilität und eine längere Standzeit verleiht, wird also erfindungsgemäß ganz oder teilweise durch ethoxylierte Fettalkohole (FAEO) ersetzt.

Bevorzugte Mengenverhältnisse von FA/FAEO sind 40:60 bis 60:40 und besonders bevorzugt 50:50 bis 30:70.

Die Fettalkohole besitzen bevorzugt eine Kettenlänge von 6 bis 20 C-Atomen. Die ethoxylierten Fettalkohole besitzen bevorzugt ebenfalls Fettalkoholreste mit 6 bis 20 Kohlenstoffatomen und einen Ethoxylierungsgrad von durchschnittlich wenigstens 6 EO-Einheiten pro Molekül, und ab einer C8-Fettalkoholkette weiter bevorzugt wenigstens 10 EO-Einheiten pro Molekül. Vorzugsweise besitzt der ethoxylierte Fettalkohol durchschnittlich wenigstens ebenso viele oder mehr EO-Einheiten wie Kohlenstoffatome in der FA-Kette, bzw. bei gemischten ethoxylierten Fettalkoholen der gemittelten Länge der FA-Kette.

Besonders bevorzugt beträgt der Ethoxylierungsgrad bis zum doppelten Wert der FA-Alkylrestlänge +6, wenigstens jedoch durchschnittlich wenigstens 6 EO-Einheiten je Molekül und ab C8-FA-Kettenlänge bevorzugt wenigstens 10 EO-Einheiten je Molekül. Beispielsweise beträgt demnach ein besonders bevorzugter Ethoxylierungsgrad für einen ethoxylierten C16-Fettalkohol durchschnittlich zwischen 10 und 38 EO-Einheiten und für einen ethoxylierten C8-Fettalkohol durchschnittlich wenigstens 6, weiter bevorzugt wenigstens 10 und bis zu 22 EO-Einheiten je Molekül.

Der Gehalt der Fettalkoholkomponente im Schäumungsmittel beträgt bevorzugt wenigstens 5 Gew-%. Der Maximalgehalt der Fettalkoholkomponente beträgt nicht mehr als der Gehalt der Glykolkomponente, vorzugsweise nicht mehr als die Hälfte der Konzentration der Glykolkomponente.

Die Glykolkomponente c) besteht aus einem einzelnen Glykol oder mehreren Glykolen ausgewählt aus der Gruppe: niedere Glykole, einschließlich Alkylglykole, Alkylenglykole und Di-, Tri- und Polyglykole, vorzugsweise mit bis zu 12 Kohlenstoffatomen je Molekül, und besonders bevorzugt ausgewählt aus der Gruppe: Alkylglykole und Alkylenglykole bis C10-Alkyl, Diglykole und Diglykolether. Besonders bevorzugte Beispiele sind Propylenglykol, Hexylenglykol, Butylenglykol, Butyldiglykol, Diethylenglykol, Dipropylenglykol. Es ist besonders bevorzugt, wenn die Mischung Diglykole, Triglykole und/oder Alkyldiglykole enthält oder aus diesen besteht. Es wird derzeit vermutet, dass die besonders vorteilhafte Wirkung der letztgenannten Gruppe darauf beruht, dass die chemische Ähnlichkeit der Struktureinheiten eine besonders gute Mischbarkeit und Stabilität über einen weiten Temperaturbereich bewirkt.

Die Glykolkomponente wirkt als Teil des Lösemittels, bzw. als organischer Bestandteil des wässrig-organischen Lösemittelsystems und gleichzeitig als Lösungsvermittler bezüglich anderer Inhaltsstoffe, Additive und/oder Zusatzstoffe. Die Glykole dienen zugleich als Gefrierschutz und bewirken, dass das Schäumungsmittel nach der Erfindung auch bei Temperaturen unter 10 °C einsatzfähig bleibt.

Die Glykolkomponente liegt in dem Schäumungsmittel vorzugsweise in einem Gehalt von 10 bis 50 Gew.-% vor.

Das Schäumungsmittel kann in weiteren Ausführungsformen zusätzliche Additive, insbesondere aus der Beton-, Kalk- und Gipsindustrie bekannte Zusatzstoffe, wie Füllstoffe, Farbstoffe, Netzmittel, Verzögerer, Beschleuniger, Alkalisalze, Thixotropierungsmittel und/oder organische oder anorganische Säuren oder Basen zur pH-Wert-Einstellung enthalten.

Die Additive, bzw. Zusatz- und Hilfsstoffe sind, soweit überhaupt enthalten in einem üblichen Additivgehalt in dem Schäumungsmittel enthalten, d.h. mit bis zu 2, 3 oder 5 Gew.-% und die Additive zusammen in einem Gehalt von maximal bis zu 10 Gew.-% des Schäumungsmittels.

Füllstoffe und Thixotropierungsmittel werden - wiederum soweit in der Rezeptur gewünscht - häufig in einer höheren Konzentration erforderlich als andere Additive. Ihr Gehalt beträgt vorzugsweise in der Summe bis zu 10 Gew.-%. Füllstoffe und Thixotropierungsmittel sind z.B. Si-basierte anorganische Salze und/oder Oxide, wie Silica und/oder Orthosilikate.

In dem Schäumungsmittel kann vorzugsweise zusätzlich ein Polycarboxylatether als ein mögliches Additiv enthalten sein. Das Polycarboxylatether-Additiv, das vorzugsweise in einer Menge von 0,01 - 5 Gew.% bezogen auf das Schäumungsmittelgesamtgewicht, weiter vorzugsweise 0,01 - 3 Gew.%, enthalten ist, bewirkt eine längere Haltbarkeit des aus dem Schäumungsmittel erzeugten Schaums (z.B. Wasser und Schäumungsmittel allein) und auch des Bindemittelleimschaums. Für diese Wirkung genügt überraschenderweise schon eine sehr geringe Menge des Polycarboxylatethers. Verwendbar sind hierfür die aus der Zementindustrie als Fließmittel bekannten Polycarboxylatether.

Nachfolgend wird eine bevorzugte Schäumungsmittelzusammensetzung nach der Erfindung angegeben:
a) 1 - 5 Gew.-% (Substanzgehalt) eines oder mehrere anionischer Tenside,
b) 2 - 20 Gew.-% der Fettalkoholkomponente,
c) 10 - 50 Gew.-% der Glykolkomponente.
d) 0 - 10 Gew.-% in Summe an Füllstoffen oder Thixotropierungsmitteln,
e) 0 - 10 Gew.-% in Summe an weiteren Additiven,
ad 10 Gew.-% Wasser.

Mit Hilfe der vorstehenden Beschreibung der Bestandteile können weitere Beispiele, bevorzugt im angegebenen Rahmen, aufgefunden werden.

Das Schäumungsmittel kann vor der Anwendung mit zusätzlichem Wasser auf sein bis zu 25faches Volumen verdünnt werden. Dem liegt zugrunde, dass das Schäumungsmittel vorzugsweise als ein Konzentrat angeboten und transportiert wird. Es wird vom Anwender zunächst verdünnt und dann zu einem Schaum aufgeschäumt, der in einen Bindemittelleim bzw. eine aufzuschäumende Masse eingebracht und mit diesem vermischt wird, bevor das geschäumte Gemisch aushärten gelassen wird.

In Weiterbildung der Erfindung ist es möglich, das Schäumungsmittel in pastöser oder pulverförmig fester Form zu verwenden, indem das zuvor beschriebene flüssige Schäumungsmittel gefriergetrocknet oder im Vakuum so weit eingedampft wird, dass sich die gewünschte Konsistenz ergibt. Die Trocknung hat Vorteile für den Transport. Aus dem getrockneten Produkt kann jederzeit ein flüssiges Schäumungsmittel regeneriert werden.

Insbesondere ein pulverförmiges getrocknetes Schäumungsmittel (vakuumgetrocknet oder gefriergetrocknet) spart durch das geringere Gewicht erheblich Transportkosten und liefert damit wertvolle zusätzliche Anwendungsvorteile.

Es ist als ein besonderer Vorteil der Erfindung anzusehen, dass es gelungen ist, ein Schäumungsmittel, insbesondere für hydraulische Bindemittelleime bereitzustellen, das vollständig aus kommerziell in ausreichender Menge erhältlichen, für zahlreiche andere Zwecke gebräuchlichen und dadurch relativ preisgünstig beziehbaren Inhaltsstoffen besteht.

## Patentansprüche

1. Schäumungsmittel, insbesondere für das Schäumen eines Baustoff-Bindemittelleims zur Herstellung porenhaltiger Leichtbau- und Dämmmaterialien, wobei das Schäumungsmittel in Form einer wässrig-organischen Lösung vorliegt, die zu wenigstens 85 Gew.-% aus den folgenden Bestandteilen und Wasser besteht:
a) einer Tensidkomponente, die wenigstens ein schaumbildendes ionisches Tensid enthält,
b) einer Fettalkoholkomponente, die wenigstens einen Fettalkohol und wenigstens einen ethoxylierten Fettalkohol im Mischungsverhältnis FA/FAEO von 30:70 bis 70:30 enthält,
c) einer Glykolkomponente, die wenigstens einen Bestandteil aus der Gruppe der Alkylglykole und Alkyldiglykole enthält.

2. Schäumungsmittel nach Anspruch 1, **dadurch gekennzeichnet, dass** der Fettalkohol der Fettalkoholkomponente ein C6-C20 Fettalkohol oder ein Gemisch aus C6 bis C20 Fettalkoholen ist.

3. Schäumungsmittel nach Anspruch 1 oder 2, **dadurch gekennzeichnet, dass** der ethoxylierte Fettalkohol der Fettalkoholkomponente ein ethoxylierter C6 - C24 Fettalkohol mit einem Ethoxylierungsgrad von wenigstens durchschnittlich 6 EO-Einheiten je Molekül ist, oder ein Gemisch der vorgenannten ethoxylierten Fettalkohole.

4. Schäumungsmittel nach einem der Ansprüche 1 bis 3, **dadurch gekennzeichnet, dass** die Tensidkomponente anionische Tenside enthält, vorzugsweise ausgewählt aus der Gruppe der Sulfonsäuren und Sulfonate, insbesondere der Alpha-Olefinsulfonsäuren und -sulfonsäuresalze, der Alkylsulfate, der Alkylensulfate, der Alkylsulfonate, der Schwefelsäuremonoestersalze und/oder aus Tensiden aus der Gruppe der Carbonsäuren und Carbonsäuresalze.

5. Schäumungsmittel nach einem der Ansprüche 1 bis 4 **dadurch gekennzeichnet, dass** zusätzlich Additive, wie Füllstoffe, Farbstoffe, Netzmittel, Thixotropierungsmittel und/oder organische oder anorganische Säuren oder Basen zur pH-Wert-Einstellung in dem Mittel enthalten sind.

6. Schäumungsmittel nach einem der Ansprüche 1 bis 5, **dadurch gekennzeichnet, dass** ein Polycarboxylatether in dem Schäumungsmittel enthalten ist, vorzugsweise in einer Menge von 0,01 bis 5 Gew.%.

7. Schäumungsmittel nach einem der Ansprüche 1 bis 6 bestehend aus:
a) 1 - 5 Gew.-% (Substanzgehalt) eines oder mehrere anionischer Tenside,
b) 2 - 20 Gew.-% der Fettalkoholkomponente,
c) 10 - 50 Gew.-% der Glykolkomponente.
d) 0 - 10 Gew.-% in Summe an Füllstoffen oder Thixotropierungsmitteln,
e) 0 - 10 Gew.-% in Summe an weiteren Additiven,
ad 100 Gew.-% Wasser.

8. Schäumungsmittel nach einem der Ansprüche 1 bis 7, **dadurch gekennzeichnet, dass** es mit zusätzlichem Wasser auf sein bis zu 25faches Volumen verdünnt ist.

9. Schäumungsmittel in pastöser oder pulverförmig fester Form, welches durch Gefriertrocknung oder Vakuumeindampfung aus einem Schäumungsmittel nach einem der Ansprüche 1 bis 7 erhältlich ist.

10. Porenleichtbauprodukt, insbesondere Bauelement, erhältlich unter Verwendung eines mit dem Schäumungsmittel nach einem der Ansprüche 1 bis 9 geschäumten Bindemittelleims.

11. Porenleichtbauprodukt nach Anspruch 10, **dadurch gekennzeichnet, dass** der Bindemittelleim ein Zementleim oder ein Gipsleim ist.
